# EUROPEAN PATENT SPECIFICATION

(11) **EP 4 626 725 B1**
(45) Date of publication and mention of the grant of the patent: **25.03.2026**
(21) Application number: 23821132.0
(22) Date of filing: 29.11.2023
(51) Int. Cl.: B60H 1/00, F16K 11/085, B60H 1/14, F16K 27/00

(54) **ELECTRIC VEHICLE THERMAL MANAGEMENT**
WÄRMEVERWALTUNG FÜR ELEKTROFAHRZEUG
GESTION THERMIQUE DE VÉHICULE ÉLECTRIQUE

(30) Priority: 29.11.2022 GB 202217872
(43) Date of publication of application: 08.10.2025
(73) Proprietor: Jaguar Land Rover Limited, Coventry, Warwickshire CV3 4LF (GB)
(72) Inventor: JACKSON, Graham, Coventry Warwickshire CV3 4LF (GB); SMITH, Robert, Coventry Warwickshire CV3 4LF (GB); KRISHNASAMY, Jacob, Coventry Warwickshire CV3 4LF (GB); RUSSELL, Alexander, Coventry Warwickshire CV3 4LF (GB); CRAWFORD, Lee, Coventry CV3 4LF Warwickshire (GB)
(74) Representative: Jaguar Land Rover Patents Department
(86) International application number: PCT/EP2023/083506
(87) International publication number: WO 2024/115553

(56) References cited:
- DE-A1- 102019 107 190
- US-A1- 2020 171 914
- US-B2- 11 407 275

## Description

### TECHNICAL FIELD

The present disclosure relates to electric vehicle thermal management. More particularly, but not exclusively, the present disclosure relates to a control valve apparatus for an electrical vehicle thermal management system. Aspects of the invention relate to a control valve apparatus, a thermal management system and an electric vehicle.

### BACKGROUND

It is known to provide an electric vehicle with a thermal management system to manage the temperature of vehicle components, such as a traction battery and electric drive unit. A liquid coolant is circulated within a thermal management system to manage the thermal load on the vehicle components. The thermal management system typically comprises one or more heat exchangers for controlling the temperature of the coolant to provide cooling and heating, as required. A plurality of valves are provided to control the coolant supply to the heat exchangers within the thermal management system. Different actuators are required for the different valves to provide appropriate operating characteristics for each valve.

It is an aim of the present invention to address one or more of the disadvantages associated with the prior art. US11407275 discloses a heat flow management device for motor vehicles that has a refrigerant circulation, a power train coolant circulation and a heating line heat carrier circulation. DE102019107190 discloses a valve which has a plurality of connections, namely a plurality of inlets and a plurality of outlets as well as an actuating body and a plurality of switching positions. US2020171914 discloses a vehicle thermal management system that includes a first group including a battery, a second group including one or more power electronics (PE) components, a plurality of cooling lines in thermal communication with an air-cooled radiator, and a six-way valve.

### SUMMARY OF THE INVENTION

Aspects and embodiments of the invention provide a control valve apparatus, a thermal management system and an electric vehicle as claimed in the appended claims.

According to an aspect of the present invention there is provided a control valve apparatus for controlling the circulation of a coolant in an electric vehicle thermal management system; the control valve apparatus comprising:
a bypass control valve configured to control the flow of the coolant through a battery supply conduit and/or a battery bypass conduit;
a proportional control valve configured to control the proportion of the coolant that flows through a heat exchanger supply conduit and/or a heat exchanger bypass conduit; and
an actuator, such as a rotary actuator, configured to actuate the bypass control valve and the proportional control valve.

The electric vehicle comprises a battery and at least one electric drive unit. The battery may be a high voltage (HV) battery. At least in certain embodiments, the battery is a traction battery for supplying power to at least one traction motor for propelling the electric vehicle. The battery bypass conduit is configured to cause at least some of the coolant to bypass the battery, i.e., to be diverted around the battery. The electric vehicle thermal management system comprises a heat exchanger. The heat exchanger bypass conduit is configured to cause at least some of the coolant to bypass the heat exchanger, i.e., to be diverted around the heat exchanger. At least in certain embodiments, the proportional control valve is configured to control the proportion of the coolant that flows through the heat 35 exchanger and the proportion that flows through the heat exchanger bypass conduit (thereby bypassing the heat exchanger). The proportional control valve may be continuously variable. For example, the proportional control valve may be continuously variable to adjust the proportion of the coolant supplied to the heat exchanger supply conduit and/or the heat exchanger bypass conduit. The heat exchanger may, for example, be a low temperature heat exchanger. The heat exchanger may be configured to reject thermal energy from the coolant after circulation through the at least one electric drive unit.

The control valve apparatus is provided to control the circulation of coolant to provide cooling of vehicle systems, such as a battery and/or electric drive unit(s). The coolant is typically a liquid coolant. The bypass control valve and the proportional control valve are actuated together to control the circulation of the coolant. The actuator is configured to actuate both the bypass control valve and the proportional control valve. In use, the bypass control valve and the proportional control valve are actuated in unison by the actuator. At least in certain embodiments, the relationship between the bypass control valve and the proportional control valve is fixed. At least in certain embodiments, the dual function of the actuator may reduce the complexity of the control valve apparatus.

The actuator may comprise a drive member configured to actuate the bypass control valve and the proportional control valve. The bypass control valve and the proportional control valve may both be connected to the drive member. The use of the same drive member helps to ensure that the bypass control valve and the proportional control valve operate together in a predetermined manner.

The bypass control valve is configured to control the flow of the coolant through the battery bypass conduit. The bypass control valve may comprise a valve operable to open and close the battery bypass conduit. The bypass control valve is selectively configured in an open state and a closed state. The bypass control valve is operable to open and close the battery bypass conduit, thereby selectively enabling and disabling coolant bypassing the battery.

The bypass control valve may comprise a first valve member operable to open and close the bypass control valve. The first valve member may be moveable between a first position to open the bypass control valve and a second position to close the bypass control valve. The first valve member may translate, for example along a linear path, to open and close the bypass control valve. Alternatively, the first valve member may rotate, for example about a rotational axis, to open and close the bypass control valve. For example, the bypass control valve may comprise a first rotary valve member rotatable to open and close the bypass control valve. The actuator may be operable to rotate the first rotary valve member.

For example, the actuator may comprise a rotary actuator, the operating state of the bypass and proportional control valves being dependent on an angular position of the actuator.

The proportional control valve may be connected to the heat exchanger bypass conduit and the heat exchanger supply conduit. The heat exchanger bypass conduit and the heat exchanger supply conduit may be connected to inlets of the proportional control valve. An outlet of the proportional control valve may be connected to a coolant pump. Alternatively, the heat exchanger bypass conduit and the heat exchanger supply conduit may be connected to outlets of the proportional control valve. An inlet of the proportional control valve may be connected to a coolant supply conduit, for example connected to an outlet of a coolant pump. In use, the proportional valve may control the proportion of the coolant supplied to the heat exchanger bypass conduit and to the heat exchanger. The proportional control valve may, for example, comprise a three-way proportional valve.

The proportional control valve may comprise a second valve member. The second valve member may be moveable to control the proportion of the flow of coolant supplied to the heat exchanger bypass conduit and the heat exchanger. The second valve member may be moveable to adjust the extent to which the valve ports of the proportional control valve are open/ closed. The second valve member may translate, for example along a linear path. Alternatively, the second valve member may rotate, for example about a rotational axis. The proportional control valve may comprise a second rotary valve member rotatable to provide proportional control of flow of the coolant through the heat exchanger bypass conduit.

At least in certain embodiments, the actuator is operable to displace the first and second valve members. The actuator may, for example, be configured to rotate the first and second rotary valve members.

The first and second rotary valve members may be rotatable about a rotational axis. The first and second rotary valve members may be offset from each other along the rotational axis.

The first rotary valve member may be rotatable rotate about a first axis; and the second rotary valve member may be rotatable about a second axis. The first axis and the second axis may be offset from each other. The first axis and the second axis may be parallel to each other, for example. Alternatively, the first and second rotary valve members may rotate about a common axis. The first axis and the second axis may be co-axial. The first and second rotary valve members may be offset along the common axis.

The drive member may be a drive shaft. The first and second rotary valve members may be connected to the drive shaft. The first and second rotary valve members may be fastened to the drive shaft.

The first and second valve members may be connected to the drive member. The first and second valve members may be formed integrally.

The actuator may comprise an electromechanical actuator, such as an electric motor or a solenoid. The actuator may comprise a linear actuator. Alternatively, the actuator may comprise a rotary actuator. The operating state of the bypass control valve and the proportional control valve may be controlled in dependence on an angular position of the rotary actuator.

The bypass control valve may be configured to close the battery bypass conduit when the rotary actuator is in a first angular range. The bypass control valve may be configured to open the battery bypass conduit when the rotary actuator is in a second angular range. The first and second angular ranges may be offset from each other, i.e. the first and second angular ranges may be non-overlapping.

The rotation of the rotary actuator in a first direction in the first angular range may progressively increase the proportion of the coolant flowing through the heat exchanger bypass conduit. As the proportion of the coolant flowing through the heat exchanger bypass conduit increases, there is a corresponding decrease in the proportion of the coolant supplied to the heat exchanger.

The rotation of the rotary actuator in a second direction (opposite to the first direction) in the first angular range may progressively decrease the proportion of the coolant flowing through the heat exchanger bypass conduit. As the proportion of the coolant through the heat exchanger bypass conduit decreases, there is a corresponding increase in the proportion of the coolant supplied to the heat exchanger.

The rotation of the rotary actuator in the first direction in the second angular range progressively decreases the proportion of the coolant flowing through the heat exchanger bypass conduit. As the proportion of the coolant through the heat exchanger bypass conduit increases, there is a corresponding decrease in the proportion of the coolant supplied to the heat exchanger.

The control valve apparatus may comprise at least one crossflow valve configured selectively to control the connection between a first coolant circulation loop and a second coolant circulation loop.

The at least one crossflow valve may be configured selectively to connect the first and second coolant circulation loops. The at least one crossflow valve may be configured selectively to connect the first and second coolant circulation loops in series. The at least one crossflow valve may be operable selectively to connect the first and second coolant circulation loops in series to form a single, continuous circulation loop. The circulation loop may include a coolant pump.

According to a further aspect of the present invention there is provided a thermal management system for an electric vehicle comprising a control valve apparatus. The control valve apparatus may of the type described herein.

The thermal management system may comprise a battery supply conduit and a battery bypass conduit. The bypass control valve may be configured to control the flow of the coolant through the battery bypass conduit and/or the battery supply conduit.

The thermal management system may comprise a heat exchanger supply conduit and a heat exchanger bypass conduit. The proportional control valve is configured to control the proportion of the coolant that flows through the heat exchanger supply conduit and/or the heat exchanger bypass conduit.

The proportional valve may include first and second inlet ports for receiving coolant flow from the heat exchanger supply conduit and the heat exchanger bypass conduit, respectively, and an outlet port for delivering coolant flow to the coolant pump.

The proportional valve may include four valve members which are operable to progressively open and close the inlet and outlet ports so as to vary the proportion of coolant flow supplied from each of the first and second inlet ports to the outlet port and, hence, the coolant pump.

The thermal management system may comprise a first coolant circulation loop and a second coolant circulation loop. The first and second coolant circulation loops may be independent of each other. In other words, the first and second coolant circulation loops may be separate from each other. Alternatively, the thermal management system may be configured selectively to connect the first and second coolant circulation loops. For example, at least one crossflow valve may be provided selectively to connect the first coolant circulation loops to the second coolant circulation loop. The at least one crossflow valve may be operable selectively to connect the first and second coolant circulation loops in series to form a single, continuous circulation loop.

The control valve apparatus may comprise at least one crossflow valve configured selectively to control the connection between a first coolant circulation loop and a second coolant circulation loop.

The control valve apparatus has been described herein with particular reference to a proportional control valve. It will be understood that the control valve apparatus may be configured to provide a variable flow control valve. The variable flow control valve may be operated to controllably vary the flow through the control valve apparatus.

According to an aspect of the present invention there is provided a control valve apparatus for controlling the circulation of a coolant in an electric vehicle thermal management system; the control valve apparatus comprising:
a bypass control valve configured to control the flow of the coolant through a battery supply conduit and/or a battery bypass conduit;
a variable control valve configured to control the flow of the coolant through a heat exchanger supply conduit and/or a heat exchanger bypass conduit; and
an actuator configured to actuate the bypass control valve and the variable control valve. The variable control valve may be continuously variable. For example, the variable control valve may be continuously variable to adjust the flow of the coolant through the heat exchanger supply conduit and/or the heat exchanger bypass conduit. The actuator may comprise a drive member configured to actuate the bypass control valve and the variable control valve.

According to a still further aspect of the present invention there is provided an electric vehicle comprising a control valve apparatus as described herein.

The vehicle may comprise an electric powertrain and/or a traction battery. The thermal management system may be configured to manage thermal properties of the at least one electric drive unit and/or the traction battery. The control valve apparatus may be configured to control the circulation of a coolant in the thermal management system.

A thermal management system for a vehicle that includes an electric traction motor, a traction battery to power the traction motor, an environmental heat dissipator, a heat exchanger for controlling the temperature in a vehicle cabin for vehicle occupants and a coolant flow circuit to circulate coolant through the battery and motor, the coolant flow circuit comprising first and second coolant pumps and first and second valve units, wherein
the first valve unit controls a bypass of the coolant flow circuit through the battery and a bypass around the environmental heat dissipator; and
the second valve unit controls first and second coolant flow loops of the coolant flow circuit providing three modes of operation:
   in a first mode, the first and second loops are independent, the first loop comprising the first coolant pump, the battery, the second valve unit and the heat exchanger, the second loop comprising the second coolant pump, the second valve unit, the traction motor and the environmental heat dissipator,
   in a second mode, the first and second loops are connected in series with one another; and
   in a third mode, the first loop comprising the first coolant pump, the battery, and the second valve unit, the second loop comprising the second coolant pump, the heat exchanger the second valve unit, the traction motor and the environmental heat dissipator.

According to a further aspect of the present invention there is provided a non-transitory computer-readable medium having a set of instructions stored therein which, when executed, cause a processor to perform the method(s) described herein.

Any control unit or controller described herein may suitably comprise a computational device having one or more electronic processors. The system may comprise a single control unit or electronic controller or alternatively different functions of the controller may be embodied in, or hosted in, different control units or controllers. As used herein the term "controller" or "control unit" will be understood to include both a single control unit or controller and a plurality of control units or controllers collectively operating to provide any stated control functionality. To configure a controller or control unit, a suitable set of instructions may be provided which, when executed, cause said control unit or computational device to implement the control techniques specified herein. The set of instructions may suitably be embedded in said one or more electronic processors. Alternatively, the set of instructions may be provided as software saved on one or more memory associated with said controller to be executed on said computational device. The control unit or controller may be implemented in software run on one or more processors. One or more other control unit or controller may be implemented in software run on one or more processors, optionally the same one or more processors as the first controller. Other suitable arrangements may also be used.

### BRIEF DESCRIPTION OF THE DRAWINGS

One or more embodiments of the invention will now be described, by way of example only, with reference to the accompanying drawings, in which:
Figure 1 shows an electric vehicle comprising a thermal management system having a control valve apparatus in accordance with an embodiment of the present invention;
Figure 2 shows a schematic representation of the thermal management system shown in Figure 1;
Figure 3 shows a partial exploded view of the control valve apparatus provided in the thermal management system;
Figures 4A to 4D illustrate operation of a bypass control valve provided in the control valve apparatus shown in Figure 3;
Figures 5A to 5D illustrate operation of a proportional control valve provided in the control valve apparatus shown in Figure 3;
Figures 6A to 6C illustrate operation of a first crossflow valve provided in the control valve apparatus shown in Figure 3;
Figures 7A to 7C illustrate operation of a second crossflow valve provided in the control valve apparatus shown in Figure 3;
Figure 8 shows a schematic representation of a control unit for controlling operation of the valve control apparatus in accordance with an embodiment of the present invention;
Figure 9 shows the thermal management system in accordance with an embodiment of the present invention in a first operating mode;
Figure 10 shows the thermal management system in accordance with an embodiment of the present invention in a second operating mode; and
Figure 11 shows the thermal management system in accordance with an embodiment of the present invention in a third operating mode.

### DETAILED DESCRIPTION

A control valve apparatus 1 for controlling the circulation of a coolant in a thermal management system 3 in accordance with an embodiment of the present invention is described herein with reference to the accompanying Figures.

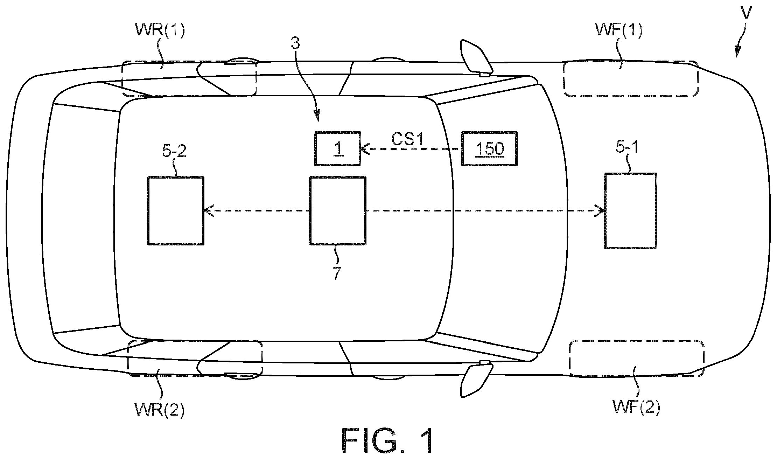

In Figure 1, the thermal management system 3 is provided in a road vehicle V, such as an automobile. The vehicle V comprises at least one electric drive unit 5-n and a battery unit 7. The or each electric drive unit 5-n comprises one or more electric traction motors for propelling the vehicle V. The battery unit 7 is a high voltage (HV) battery and is configured to supply electrical current to the at least one drive unit 5-n. In the present embodiment, the vehicle V comprises a front electric drive unit 5-1 for driving the front wheels WF of the vehicle V; and a rear electric drive unit 5-2 for driving the rear wheels WR of the vehicle V. In use, the front and rear electric drive units 5-1, 5-2 are both powered by the battery unit 7. The front electric drive unit 5-1 may comprise a single electric traction motor configured to drive both front wheels WF. Similarly, the rear electric drive units 5-2 may comprise a single electric traction motor configured to drive both rear wheels WR. Alternatively, each of the front and rear electric drive units 5-1, 5-2 may comprise separate electric traction motors not shown configured to drive respective wheels of the vehicle V. It will be understood that the thermal management system 3 may be used in a vehicle V having a single electric drive unit 5-1, for example driving the front or rear wheels WF, WR.

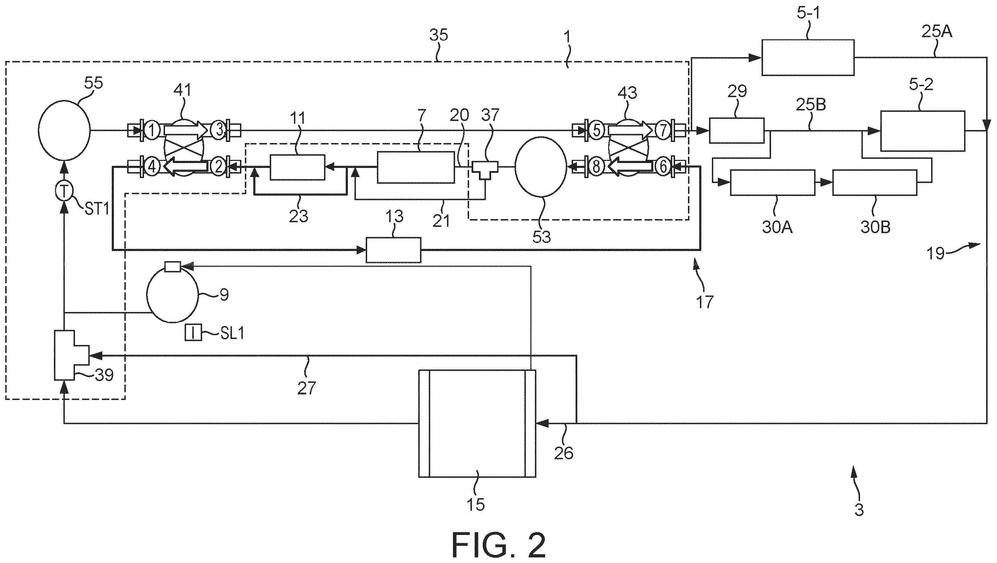

A schematic representation of the thermal management system 3 is shown in Figure 2. The control valve apparatus 1 is configured to control the circulation of the coolant to manage a thermal load of the front electric drive units 5-1, the rear electric drive unit 5-2, the battery unit 7 and the vehicle cabin for occupant comfort. The thermal management system 3 comprises a coolant heater 11; a first heat exchanger 13; and a second heat exchanger 15. The coolant heater 11 is configured to heat the coolant, for example to provide fast warm-up of a cabin (not shown) of the vehicle V. The coolant heater 11 in the present embodiment is a high voltage (HV) heater. The first heat exchanger 13 is bi-directional and can be configured selectively to cool the coolant supplied to the battery unit 7, or to supply heat from the outside environment to heat the coolant. A refrigerant can be pumped to a refrigerant side of the first heat exchanger 13 to cause the first heat exchanger 13 to operate as a chiller. The supply of refrigerant can be halted to reduce or prevent heat exchange in the first heat exchanger 13. The second heat exchanger 15 is a low temperature heat exchanger (or a low temperature radiator) and is operative to reject heat from the coolant.

The control valve apparatus 1 comprises a first pump 53 and a second pump 55. A degas tank 9 is provided for the second heat exchanger 15, which is also referred to as an environmental heat dissipator. A coolant level sensor SL1 may be provided in the degas tank 9 to measure the level of the coolant. The thermal management system 3 comprises a first coolant circulation loop 17; and a second coolant circulation loop 19. A liquid coolant is circulated through the first and second coolant circulation loops 17, 19 to perform cooling of the front and rear electric drive units 5-1, 5-2 and the battery unit 7. At least one coolant temperature sensor ST1 is provided for measuring the temperature of the coolant. In the present embodiment, the coolant temperature sensor ST1 is provided at an inlet to the second pump 55. The coolant temperature sensor ST1 measures the temperature of the coolant supplied to the second pump 55. The coolant temperature sensor ST1 may be provided elsewhere in the thermal management system 3. An electric fan (not shown) may optionally be provided to circulate air over the second heat exchanger 15 to promote cooling of the coolant.

The first coolant circulation loop 17 is configured to supply coolant to the battery unit 7. The coolant heater 11 and the first heat exchanger 13 are provided in the first coolant circulation loop 17. The coolant heater 11 is provided downstream of the battery unit 7 and, in use, is operative to heat the coolant. The first heat exchanger 13 is disposed upstream of the battery unit 7 and, in use, can be configured to cool the coolant prior to introduction into the battery unit 7. As described herein, the first and second coolant circulation loops 17, 19 may be selectively connected to each other to enable the supply of coolant from the first heat exchanger 13 to the front and rear electric drive units 5-1, 5-2. The first coolant circulation loop 17 comprises a battery supply conduit 20, a battery bypass conduit 21, and a coolant heater bypass conduit 23. The battery supply conduit 20 is configured to supply coolant to the battery 7. The battery bypass conduit 21 can be selectively opened and closed to control the supply of coolant to perform cooling of the battery unit 7. The operation of the battery bypass conduit 21 is described in more detail herein. The coolant heater bypass conduit 23 is connected in parallel to the coolant heater 11 and allows a portion of the coolant to bypass the coolant heater 11. The coolant heater bypass conduit 23 in the present embodiment is provided to reduce a pressure drop which may result due to flow restrictions caused by the coolant heater 11.

The second coolant circulation loop 19 is configured to supply coolant to the front and rear electric drive units 5-1, 5-2. The second heat exchanger 15 is provided in the second coolant circulation loop 19 downstream of the front and rear electric drive units 5-1, 5-2. In use, the second heat exchanger 15 rejects thermal energy from the coolant. As shown in Figure 2, the second coolant circulation loop 19 comprises first and second branches 25A, 25B for conveying the coolant to the front and rear electric drive units 5-1, 5-2 respectively. The first and second branches 25A, 25B are connected in parallel. The first and second branches 25A, 25B are both connected to the second heat exchanger 15. The second coolant circulation loop 19 comprises a heat exchanger coolant conduit 26 for supplying coolant to the second heat exchanger 15; and a heat exchanger bypass conduit 27 for selectively bypassing the second heat exchanger 15. As described herein, the control valve apparatus 1 according to the present embodiment provides proportional control of the coolant flow rate through the heat exchanger bypass conduit 27, thereby controllably increasing or decreasing the flow through the second heat exchanger 15. The second coolant circulation loop 19 is configured to supply coolant to perform cooling of an electric power unit 29 associated with the front or rear electric drive unit 5-1, 5-2. The electric power unit 29 comprises inverter/power electronics. One or more electronic control units 30A, 30B may be provided for the advanced driver-assistance systems (ADAS). A portion of the coolant supplied to the second branch 25B of the second coolant circulation loop 19 may be used to cool the one or more electronic control units 30A, 30B.

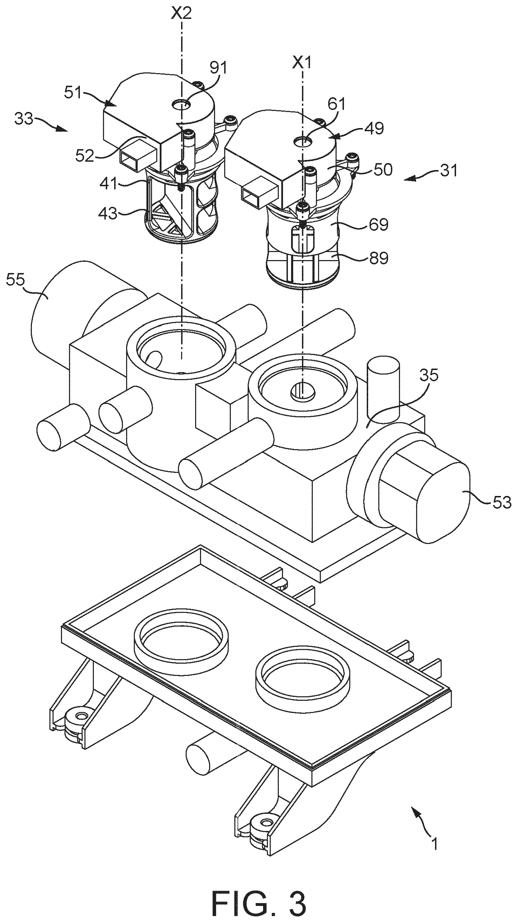

With reference to Figure 3, the control valve apparatus 1 comprises a first valve unit 31 and a second valve unit 33. In the present embodiment, the first and second valve units 31, 33 are combined in a single housing 35 (denoted by a dashed line in Figure 2). In a variant, the first and second valve units 31, 33 may be separate from each other. As described herein, the first and second valve units 31, 33 are operable independently of each other.

The first valve unit 31 comprises a bypass control valve 37 (see Figure 2) and a proportional control valve 39 (also shown in Figure 2). As described herein, the bypass control valve 37 and the proportional control valve 39 may be continuously variable. The bypass control valve 37 is configured to control the coolant flow through the battery bypass conduit 21. The bypass control valve 37 is operative to open or close the battery bypass conduit 21. The proportional control valve 39 is configured to control the coolant flow through the heat exchanger bypass conduit 27 and the second heat exchanger 15. The proportional control valve 39 is operative to control the proportion of the coolant that flows through each of second heat exchanger 15 and the heat exchanger bypass conduit 27. The bypass control valve 37 and the proportional control valve 39 are rotary valves in the present embodiment. Other types of valve are contemplated. As described herein, the bypass control valve 37 and the proportional control valve 39 are configured to be operated together. The bypass control valve 37 and the proportional control valve 39 are arranged in a stacked configuration. The bypass control valve 37 and the proportional control valve 39 are offset from each other along a first axis X1 in Figure 3.

The second valve unit 33 comprises a first crossflow valve 41 and a second crossflow valve 43. The first and second crossflow valves 41, 43 are operative to control the coolant flow through the first and second coolant circulation loops 17, 19. As described herein, the first and second crossflow valves 41, 43 can be configured in a plurality of (crossflow) operating modes to re-configure the connections of the first and second coolant circulation loops 17, 19. The first and second crossflow valves 41, 43 in the present embodiment are operated together, preferably by a common actuator. The first crossflow valve 41 and the second crossflow valve 43 are arranged in a stacked configuration. The first and second crossflow valves 41, 43 are offset from each other along a second axis X2 in Figure 3. The first and second crossflow valves 41, 43 are rotary valves in the present embodiment. Other types of valve are contemplated.

The control valve apparatus 1 comprises a first actuator 49 and a second actuator 51. The first actuator 49 is provided to operate the first valve unit 31; and the second actuator 51 is provided to actuate the second valve unit 33. In the present embodiment, the first and second actuator 49, 51 are integrated into the control valve apparatus 1. The first actuator 49 comprises a first electric motor 50 and the second actuator 51 comprises a second electric motor 52. As shown in Figure 3, the first and second actuators 49, 51 are mounted directly to the housing 35 of the control valve apparatus 1.

The first pump 53 is configured to pump the coolant in the first coolant circulation loop 17 to supply coolant to the battery unit 7. The second pump 55 is configured to pump the coolant in the second coolant circulation loop 19 to supply coolant to the front and rear electric drive units 5-1, 5-2. The first and second pumps 53, 55 are operable independently of each other. In the present embodiment, the first and second pumps 53, 55 are integrated into the control valve apparatus 1. As shown in Figure 3, the first and second pumps 53, 55 are mounted directly to the housing 35 of the control valve apparatus 1. By integrating the first and second pumps 53, 55 into the control valve apparatus 1, the need for ancillary conduits may be reduced or avoided. In a variant, the first pump 53 and/or the second pump 55 may be separate from the control valve apparatus 1.

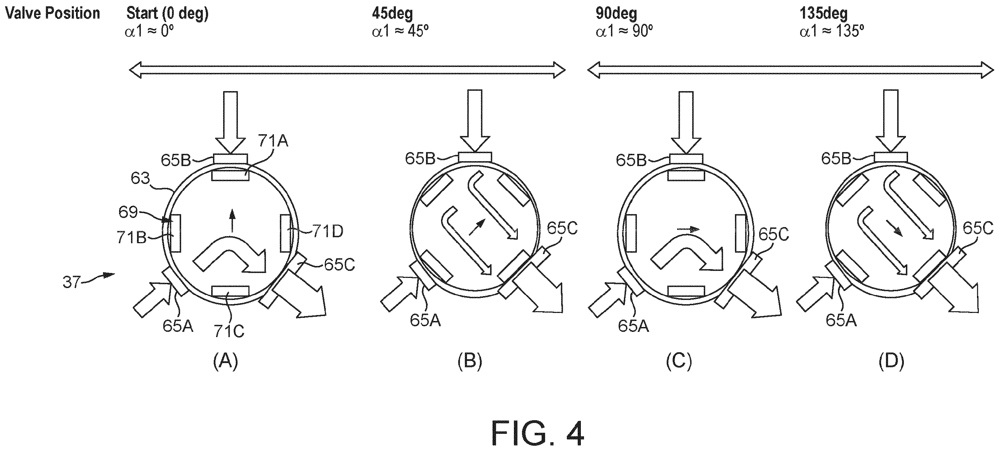

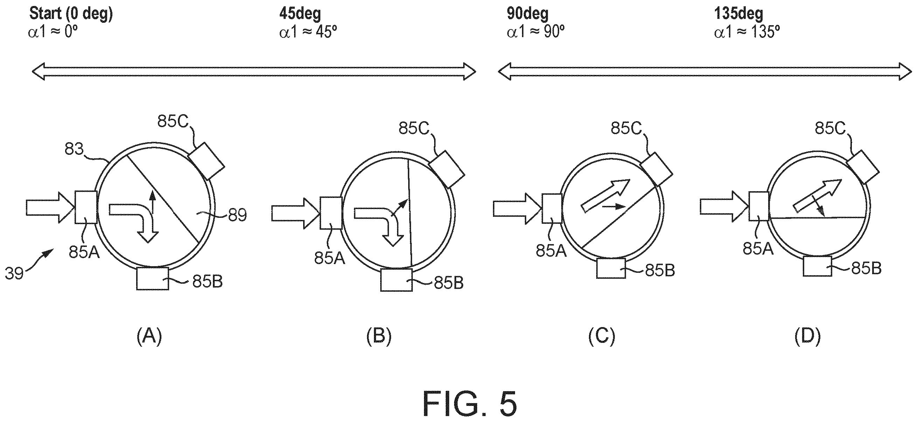

The first actuator 49 is configured to actuate the bypass control valve 37 and the proportional control valve 39 provided in the first valve unit 31. The first actuator 49 is configured to rotate a first drive member 61 about the first axis X1 to actuate the bypass control valve 37 and the proportional control valve 39. The first drive member 61 is fastened to the bypass control valve 37 and the proportional control valve 39. The rotation of the first drive member 61 results in a corresponding rotation of the bypass control valve 37 and the proportional control valve 39. As described herein, the operation of the bypass control valve 37 and the proportional control valve 39 is dependent on an angular position of the first drive member 61. In the present embodiment, the bypass control valve 37 and the proportional control valve 39 are formed integrally with each other. In a variant, the bypass control valve 37 and the proportional control valve 39 may be formed separately and connected to each other, for example by one or more fasteners. The first drive member 61 may be formed integrally with the proportional control valve 39 and/or the bypass control valve 37. Alternatively, or in addition, the bypass control valve 37 and the proportional control valve 39 may be mounted to the first drive member 61. The first drive member 61 may, for example, comprise a rotatable shaft on which the bypass control valve 37 and the proportional control valve 39 are fixedly mounted. In the present embodiment, the first actuator 49 rotates the first drive member 61 in one direction (clockwise in the cross-sectional views shown in Figures 4A-D and 5A-D) selectively to configure the bypass control valve 37 and the proportional control valve 39 in one of a plurality of (bypass) operating modes. As described herein, the bypass control valve and the proportional control valve 37, 39 are selectively configurable in first, second, third and fourth operating modes. The operating modes of the bypass control valve 37 and the proportional control valve 39 are described herein with reference to a first drive member angular position α1 (which defines the angular position of the first drive member 61 in relation to a reference angular position of approximately 0°). At least in certain embodiments, the drive member 61 may be rotated in opposite first and second directions in order to cycle through the operating modes in different sequences. For example, the rotation of the drive member 61 may be reversed (anti-clockwise in the cross-sectional views shown in Figures 4A-D and 5A-D) to return the bypass control valve 37 and the proportional control valve 39 through their operating modes.

A transverse cross-section through the proportional control valve 39 is shown in Figures 4A-D. The proportional control valve 39 is a proportional valve. In the present embodiment, the proportional control valve 39 is a 3-way proportional valve. The proportional control valve 39 comprises a valve housing 63 having a first inlet port 65A, a second inlet port 65B and an outlet port 65C. The first inlet port 65A is connected to the heat exchanger supply conduit 26 configured to supply coolant to the second heat exchanger 15. The second inlet port 65B is connected to the heat exchanger bypass conduit 27. The outlet port 65C is connected to an inlet of the second pump 55. The proportional control valve 39 is configured to proportion the coolant supplied from each of the first and second inlet ports 65A, 65B to the outlet port 65C. The proportional control valve 39 proportions the supply of coolant from each of the second heat exchanger 15 and the heat exchanger bypass conduit 27 to the second pump 55. The proportional control valve 39 thereby controls the proportion of the coolant supplied to the second pump 55 from the second heat exchanger 15 and the heat exchanger bypass conduit 27. By varying the proportion of the coolant which flows through the second heat exchanger 15, the proportional control valve 39 can control the temperature of the coolant. In a variant, the proportional control valve 39 may be configured to proportion the coolant supplied from an inlet port to first and second outlet ports. The proportional control valve 39 may, for example, be disposed upstream of the heat exchanger 15 and be configured to proportion the coolant supplied from an inlet port to first and second outlet ports connected to the bypass 27 and heat exchanger 15.

A proportional control valve body 69 is disposed in the first valve housing 63 and is rotatable about the first axis X1 (extending vertically out of the plane of the page in Figures 4A-D). In the present embodiment, the proportional control valve body 69 comprises four (4) valve members 71A-D for progressively opening and closing each of the first inlet port 65A, the second inlet port 65B and the outlet port 65C. The valve members 71A-D are operative to control the proportion of the coolant supplied from each of the first and second inlet ports 65A, 65B to the outlet port 65C. In the present embodiment, the first inlet port 65A, the second inlet port 65B and the outlet port 65C are angularly offset from each other by approximately 120° (it will be appreciated that the angular separation is not shown precisely in Figures 4A-D) The valve members 71A-D in the present embodiment are angularly offset from each other by approximately 90°. It will be understood that the valve members 71A-D may be disposed at different angular positions, for example greater than or less than 90°. The valve members 71A-D may have a non-uniform angular distribution in the proportional control valve body 69. The flow through the first inlet port 65A, the second inlet port 65B and the outlet port 65C is dependent on the angular orientation of the proportional control valve body 69. Other valve arrangements are contemplated to provide proportional control of the coolant. For example, the proportional control valve 39 may comprise a linear actuator for displacing a valve body along a linear path.

A transverse cross-section through the bypass control valve 37 is shown in Figure 5A-5D. The bypass control valve 37 controls the supply of coolant to the battery unit 7. The bypass control valve 37 comprises a valve housing 83 having an inlet bypass port 85A, a first outlet bypass port 85B and a second outlet bypass port 85C. The inlet bypass port 85A is connected to an outlet of the first pump 53. In use, the first pump 53 is operated to supply coolant to the inlet bypass port 85A of the bypass control valve 37. The first outlet bypass port 85C is connected to the battery supply conduit 20 configured to supply coolant to the battery unit 7. The second outlet bypass port 85B is connected to the battery bypass conduit 21. The bypass control valve 37 controls flow entering the inlet port 85A and exiting the outlet ports 85B and 85C. The bypass control valve 37 is selectively configurable in one of an open state and a closed state. A bypass control valve body 89 is disposed in the valve housing 83 and is rotatable about the first axis X1 (extending vertically out of the plane of the page in Figures 5A-D). The bypass control valve body 89 comprises a circular segment for selectively opening two of the inlet bypass port 85A, the first outlet bypass port 85C and the second outlet bypass port 85B. In the present embodiment, the inlet bypass port 85A, the first outlet bypass port 85C and the second outlet bypass port 85B are angularly offset from each other by approximately 120°. The flow from the inlet bypass port 85A to one of the first and second outlet ports 85C, 85B respectively is dependent on the angular orientation of the bypass control valve body 89. Other valve arrangements are contemplated to control the supply of coolant to the battery supply conduit 20 and/or the battery bypass conduit 21. For example, the bypass control valve 37 may comprise a linear actuator for displacing a valve body along a linear path.

The proportional control valve body 69 is shown in the first operating mode (corresponding to a first drive member angular position α1 of approximately 0°) in Figure 4A. In the first operating mode, the first inlet port 65A and the outlet port 65C are substantially fully open; and the second inlet port 65B is substantially fully closed. The supply of coolant to the second pump 55 is at least substantially exclusively from the second heat exchanger 15; and the heat exchanger bypass conduit 27 is at least substantially closed. The bypass control valve body 89 is shown in the first operating mode (corresponding to a first drive member angular position α1 of approximately 0°) in Figure 5A. In the first operating mode, the inlet bypass port 85A and the second outlet bypass port 85B are substantially fully open; and the first outlet bypass port 85C is substantially fully closed. The coolant from the first pump 53 is supplied at least substantially exclusively to the battery bypass conduit 21. As the second outlet bypass port 85B is substantially fully closed, the supply of coolant to the battery unit 7 is at least substantially inhibited.

The proportional control valve body 69 is shown in the second operating mode (corresponding to a first drive member angular position α1 of approximately 45°) in Figure 4B. In the second operating mode, the first inlet port 65A is substantially fully closed; and the second inlet port 65B is substantially fully open. The outlet port 65C is partially open and sufficiently to allow a flow through the outlet port 65C. It should be noted that in the embodiment shown the outlet port 65C is not fully open because the configuration of the valves 71A-D, relative to the size of the outlet port 65C, means that only a portion of the outlet port 65C is ever open, with the valve covering the outlet port 65C to some extent even when in the open position. However, the opening of the port 65C in this way still allows a sufficient flow through the outlet port 65C.

In this second operating mode, therefore, the supply of coolant to the second pump 55 is at least substantially exclusively from the heat exchanger bypass conduit 27; and the second heat exchanger 15 is at least substantially closed. The rotation of the proportional control valve body 69 from the first operating mode to the second operating mode progressively increases the proportion of the coolant supplied to the second pump 55 from the heat exchanger bypass conduit 27, with a corresponding decrease in the proportion of the coolant supplied to the second pump 55 from the second heat exchanger 15. The bypass control valve body 89 is shown in the second operating mode (corresponding to a first drive member angular position α1 of approximately 45°) in Figure 5B. In the second operating mode, the inlet bypass port 85A and the second outlet bypass port 85B are substantially fully open; and the first outlet bypass port 85C is substantially fully closed. Thus, the supply of coolant is unchanged from the arrangement in which the bypass control valve body 89 is in the first operating mode (shown in Figure 5A).

The proportional control valve body 69 is shown in the third operating mode (corresponding to a first drive member angular position α1 of approximately 90°) in Figure 4C. In the third operating mode, the first inlet port 65A and the outlet port 65C are substantially fully open; and the second inlet port 65B is substantially fully closed. The supply of coolant to the second pump 55 is at least substantially exclusively from the second heat exchanger 15; and the heat exchanger bypass conduit 27 is at least substantially closed. The rotation of the proportional control valve body 69 from the second operating mode to the third operating mode progressively decreases the proportion of the coolant supplied to the second pump 55 from the heat exchanger bypass conduit 27, with a corresponding increase in the proportion of the coolant supplied to the second pump 55 from the second heat exchanger 15. The bypass control valve body 89 is shown in the third operating mode (corresponding to a first drive member angular position α1 of approximately 90°) in Figure 5C. In the third operating mode, the inlet bypass port 85A and the first outlet bypass port 85C are substantially fully open; and the second outlet bypass port 85B is substantially fully closed. The coolant from the first pump 53 is supplied at least substantially exclusively to the battery unit 7. The second outlet bypass port 85B is substantially fully closed and the supply of coolant to the battery bypass conduit 21 is at least substantially inhibited.

The proportional control valve body 69 is shown in the fourth operating mode (corresponding to a first drive member angular position α1 of approximately 135°) in Figure 4D. In the fourth operating mode, the first inlet port 65A is closed and the outlet port 65C is partially open. The second inlet port 65B is fully open. The supply of coolant to the second pump 55 is at least substantially exclusively from the heat exchanger bypass conduit 27 and the second heat exchanger 15 is at least substantially closed. The rotation of the proportional control valve body 69 from the third operating mode to the fourth operating mode progressively increases the proportion of the coolant supplied to the second pump 55 from the heat exchanger bypass conduit 27, with a corresponding decrease in the proportion of the coolant supplied to the second pump 55 from the second heat exchanger 15. The bypass control valve body 89 is shown in the fourth operating mode (corresponding to a first drive member angular position α1 of approximately 135°) in Figure 5D. In the fourth operating mode, the inlet bypass port 85A and the first outlet bypass port 85C are substantially fully open; and the second outlet bypass port 85B is substantially fully closed. Thus, the supply of coolant is unchanged from the arrangement in which the bypass control valve body 89 is in the third operating mode (shown in Figure 5C).

Thus, in different angular positions of the drive member 61, between 0 and 135 degrees of rotation, flow of coolant may be proportionally controlled through the heat exchanger 15 (to any proportion between all flow through the exchanger 15 (conduit 26) and all flow bypassing the exchanger 15 (conduit 27)), while, at the same time, switching of all flow through the battery unit 7 (conduit 20) to all flow bypassing the battery unit 7 (conduit 21).

The valve arrangement is carefully configured so that moving through a blended mode for either the battery 7 or the second heat exchanger 15 (where a proportion of the flow is through the battery 7 and a proportion of the flow is through the batter bypass conduit 21, and a proportion of the flow is through the second heat exchanger 15 and a proportion of the flow is through the bypass for the second heat exchanger 15) does not cause a change in the flow rate through the other of the battery7/battery by pass 21 and the second heat exchanger 15/bypass for the second heat exchanger 27.

Rotational positions of the drive member 61 between 135 and 360 degrees are not employed, other than optionally to return from the fourth to the first operating modes.

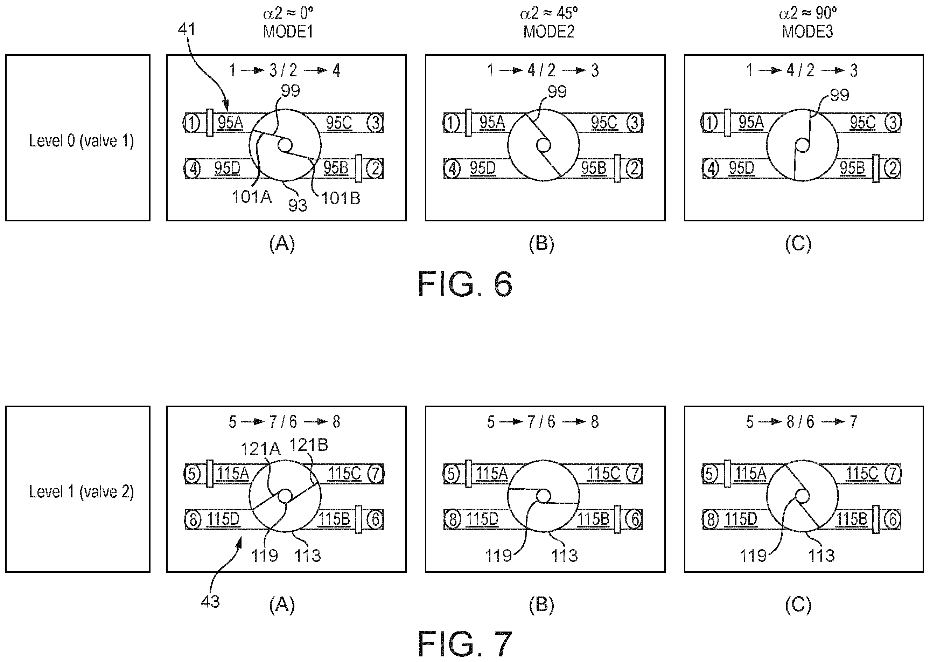

Referring again to Figures 2 and 3, the first and second crossflow valves 41, 43 are provided in the second valve unit 33 and are configured selectively to control the flow of coolant through the first and second coolant circulation loops 17, 19. The second actuator 51 is provided to control operation of the first and second crossflow valves 41, 43. The second actuator 51 is configured to rotate a second drive member 91 about a second axis X2 to actuate the first and second crossflow valves 41, 43. The second drive member 91 is fastened to the first and second crossflow valves 41, 43. The rotation of the second drive member 91 results in a corresponding rotation of the first and second crossflow valves 41, 43. As described herein, the operation of the first and second crossflow valves 41, 43 is dependent on an angular position of the second drive member 91. In the present embodiment, the first and second crossflow valves 41, 43 are formed integrally with each other. In a variant, the first and second crossflow valves 41, 43 may be formed separately and connected to each other, for example by one or more fasteners. The second drive member 91 may be formed integrally with the first crossflow valve 41 and/or the second crossflow valve 43. Alternatively, or in addition, the first and second crossflow valves 41, 43 may be mounted to the second drive member 91. The second drive member 91 may, for example, comprise a rotatable shaft on which the first and second crossflow valves 41, 43 are fixedly mounted. In the present embodiment, the second actuator 51 rotates the second drive member 91 in one direction (clockwise in the cross-sectional views shown in Figures 6A-C and 7A-C) selectively to configure the first and second crossflow valves 41, 43 in first, second and third operating modes. The operating modes of the first and second crossflow valves 41, 43 are described herein with reference to a second drive member angular position α2 (which defines the angular position of approximately the second drive member 91 in relation to a reference angular position of approximately 0°).

A transverse cross-section through the first crossflow valve 41 is shown in Figures 6A-C. The first crossflow valve 41 comprises a first crossflow valve housing 93 having first, second, third and fourth crossflow ports 95A-D. The first and third crossflow ports 95A, 95C of the first crossflow valve 41 are connected to the second coolant circulation loop 19. The second and fourth crossflow ports 95B, 95D of the first crossflow valve 41 are connected to the first coolant circulation loop 17. The first crossflow port 95A of the first crossflow valve 41 is an inlet port configured to received coolant from the second pump 55. The second crossflow port 95B of the first crossflow valve 41 is an inlet port configured to indirectly receive coolant from the first pump 53. The third crossflow port 95C of the first crossflow valve 41 is an outlet port configured to discharge coolant, the coolant being supplied from one of the first crossflow port 95A and the second crossflow port 95B. The fourth crossflow port 95D of the first crossflow valve 41 is an outlet port configured to discharge coolant, the coolant being supplied from the other one of either of the first crossflow port 95A or the second crossflow port 95B. A first crossflow valve body 99 is disposed in the first crossflow valve housing 93 and is rotatable about the second axis X2. In the present embodiment, the first crossflow valve body 99 comprises opposing valve members 101A, 101B configured to control the flow of coolant through the first and second coolant circulation loops 17, 19. The first crossflow valve body 99 is rotated by the second drive member 91 to control the flow paths through the first crossflow valve 41. When the flow is directed from the first crossflow port 95A to the third crossflow port 95C and from the second crossflow port 95B to the fourth crossflow port 95D, the first crossflow valve 41 condition is considered to be 'parallel'. In an opposite sense, when the flow is directed from the first crossflow port 95A to the fourth crossflow port 95D and from the second crossflow port 95B to the third crossflow port 95C, the first crossflow valve 41 condition is considered to be 'crossed'.

A transverse cross-section through the second crossflow valve 43 is shown in Figures 7A-C. The second crossflow valve 43 comprises a second crossflow valve housing 113 having first, second, third and fourth crossflow ports 115A-D. The first and third crossflow ports 115A, 115C of the second crossflow valve 43 are connected to the second coolant circulation loop 19. The second and fourth crossflow ports 115B, 115D are connected to the second coolant circulation loop 19. The first crossflow port 115A of the second crossflow valve 43 is an inlet port configured to receive coolant from the third crossflow port 95C of the first crossflow valve 41. The second crossflow port 115B of the second crossflow valve 43 is an inlet port configured to indirectly receive coolant from the first heat exchanger 13. The third crossflow port 115C of the second crossflow valve 43 is an outlet port configured to supply coolant to the first and second drive units 5-1, 5-2, the coolant being supplied from one of the first crossflow port 115A and the second crossflow port 115B. The fourth crossflow port 115D is an outlet port configured to supply coolant to the first pump 53, the coolant being supplied from the other one of the first crossflow port 115A and the second crossflow port 115B. A second crossflow valve body 119 is disposed in the second crossflow valve housing 113 and is rotatable about the second axis X2. In the present embodiment, the second crossflow valve body 119 comprises opposing valve members 121A, 121B configured to control the flow of coolant through the first and second coolant circulation loops 17, 19. The second crossflow valve body 119 is rotated by the second drive member 91 to control the flow paths through the second crossflow valve 43. When the flow is directed from the first crossflow port 115A to the third crossflow port 115C and from the second crossflow port 115B to the fourth crossflow port 115D, the second crossflow valve 43 condition is considered to be 'parallel'. In an opposite sense, when the flow is directed from the first crossflow port 115A to the fourth crossflow port 115D and from the second crossflow port 115B to the third crossflow port 115C, the second crossflow valve 43 condition is considered to be 'crossed'.

The first crossflow valve body 99 is shown in the first operating mode (corresponding to a second drive member angular position α2 of 0°) in Figure 6A. In the first operating mode, the first crossflow port 95A and the third crossflow port 95C of the first crossflow valve 41 are in fluid communication with each other; and the second crossflow port 95B and the fourth crossflow port 95D of the first crossflow valve 41 are in fluid communication with each other. The second crossflow valve body 119 is shown in the first operating mode (corresponding to a second drive member angular position α2 of 0°) in Figure 7A. In the first operating mode, the first crossflow port 115A and the third crossflow port 115C of the second crossflow valve 43 are in fluid communication with each other; and the second crossflow port 115B and the fourth crossflow port 115D of the second crossflow valve 43 are in fluid communication with each other. In the first operating mode, the first and second crossflow valves 41, 43 are configured to maintain the first and second coolant circulation loops 17, 19 separate from each other. The first pump 53 pumps coolant through the first coolant circulation loop 17. The second pump 55 pumps coolant through the second coolant circulation loop 19. In the first operating mode, there is active cooling of the battery unit 7; and active cooling of the front and rear electric drive units 5-1, 5-2. The battery unit 7 and the front and rear electric drive units 5-1, 5-2 are connected in parallel. The first operating mode may be appropriate during warm-up, for example.

The first crossflow valve body 99 is shown in the second operating mode (corresponding to a second drive member angular α2 position of approximately 45°) in Figure 6B. In the second operating mode, the first crossflow port 95A and the fourth crossflow port 95D of the first crossflow valve 41 are in fluid communication with each other; and the second crossflow port 95B and the third crossflow port 95C of the first crossflow valve 41 are in fluid communication with each other. The second crossflow valve body 119 is shown in the second operating mode (corresponding to a second drive member angular α2 position of approximately 45°) in Figure 7B. The operational configuration of the second crossflow valve 43 is unchanged from the first operating mode. In particular, the first crossflow port 115A and the third crossflow port 115C of the second crossflow valve 43 are in fluid communication with each other; and the second crossflow port 115B and the fourth crossflow port 115D of the second crossflow valve 43 are in fluid communication with each other. Thus, the second crossflow valve 43 maintains the first and second coolant circulation loops 17, 19 separate from each other when the first crossflow valve body 99 is in the first operating mode. In the second operating mode, the battery unit 7 and the first and second drive units 5-1, 5-2 are connected in series. The coolant is pumped by the second pump 55 into the first coolant circulation loop 17 and through the first heat exchanger 13. The coolant is then pumped by the first pump 53 into the battery unit 7. The coolant is then diverted by the first crossflow valve 41 into the second coolant circulation loop 19 and is supplied to the front and rear electric drive units 5-1, 5-2, and then through the second heat exchanger 15 before feeding the second pump 55. In the second operating mode, the second heat exchanger 15 is operational to reject heat from the coolant. The reduced temperature of the coolant may promote cooling of the battery unit 7 and the front and rear electric drive units 5-1, 5-2. The battery unit 7 and the front and rear electric drive units 5-1, 5-2 are connected in series. In this position it can be arranged that there is no ambient heat exchange by the first heat exchanger 13. The refrigerant side of the first heat exchanger 13 can be inactive (i.e., no refrigerant is pumped to the first heat exchanger 13) and substantially no heat exchange takes place in the first heat exchanger 13. There is therefore active cooling of the battery unit 7; and active cooling of the front and rear electric drive units 5-1, 5-2.

The first crossflow valve body 99 is shown in the third operating mode (corresponding to a second drive member angular position α2 of approximately 90°) in Figure 6C. The operational configuration of the first crossflow valve 41 is unchanged from the second operating mode. In particular, the first crossflow port 95A and the fourth crossflow port 95D of the first crossflow valve 41 are in fluid communication with each other; and the second crossflow port 95B and the third crossflow port 95C of the first crossflow valve 41 are in fluid communication with each other. The second crossflow valve body 119 is shown in the third operating mode (corresponding to a second drive member angular position α2 of approximately 90°) in Figure 7C. In the third mode, the first crossflow port 115A and the fourth crossflow port 115D of the second crossflow valve 43 are in fluid communication with each other; and the second crossflow port 115B and the third crossflow port 115C of the second crossflow valve 43 are in fluid communication with each other. Thus, the second crossflow valve 43 also connects the first coolant circulation loop 17 to the second coolant circulation loop 19. In the third operating mode, the coolant in the second coolant circulation loop 19 is pumped from the second pump 55 directly to the first heat exchanger 13 in the first coolant circulation loop 17, then back into the second coolant circulation loop 19 and supplied to the first and second drive units 5-1, 5-2 and the second heat exchanger 15. The first pump 53 is configured to circulate the coolant through the battery unit 7 within a shortened loop composed of sections of the first and second coolant circulation loops 17, 19.

Thus, in different angular positions of the drive member 91, between 0 and 90 degrees of rotation, in the first operating mode, flow of coolant is controlled through both circuits 17, 19 independently of one another; in the second operating mode, flow of coolant is completely through both circuits in series with one another; and in the third operating mode, flow of coolant is mostly through both circuits in series, but with a short independent circuit through the battery unit 7. Control of the angular position of the drive shaft 91 is described further below. It will be understood that the first and second crossflow valves 41, 43 revert from the third operating mode to the first operating mode once the drive shaft 91 has rotated through 180 degrees.

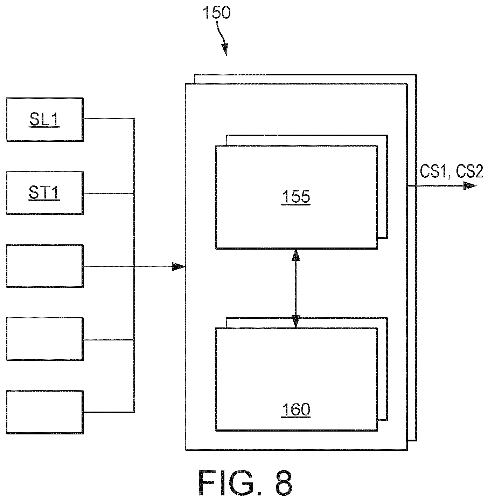

A controller 150 is provided for controlling operation of the control valve apparatus 1 and in particular to operate the first and second actuators 49, 51 to control the angular positions of the first and second drive shafts 61,91 of the first and second valve units 31,33. As shown schematically in Figure 8, the controller 150 comprises at least one electronic processor 155 and a system memory 160. A set of computational instructions is stored on the system memory 160. When executed, the computational instructions cause the system memory 160 to execute the method(s) described herein. The at least one electronic processor 155 is configured to output first and second control signals CS1, CS2 to control the first and second actuators 49, 51 respectively. The first and second actuators 49, 51 can be controlled independently of each other to provide independent control of the first and second valve units 31, 33. The at least one electronic processor 155 may be configured to receive electrical signals from the coolant level sensor SL1 and/or the coolant temperature sensor ST1. The electronic processor 155 also receives electrical signals from other sensors S1, S2, S3 associated with the vehicle and/or other control signals derived from other vehicle functions. The coolant temperature sensor ST1 measures the temperature of the coolant supplied from both the second heat exchanger 15 and the low temperature heat exchanger bypass conduit 27. The controller 150 is configured to control the proportional control valve 39 in dependence on the temperature of the coolant measured by the coolant temperature sensor ST1. In particular, the controller 150 is configured to control the proportion of the coolant supplied from the second heat exchanger 15 and the low temperature heat exchanger bypass conduit 27. The controller 150 can be configured to control the proportional control valve 39 to achieve a target temperature of the coolant supplied to the second pump 55.

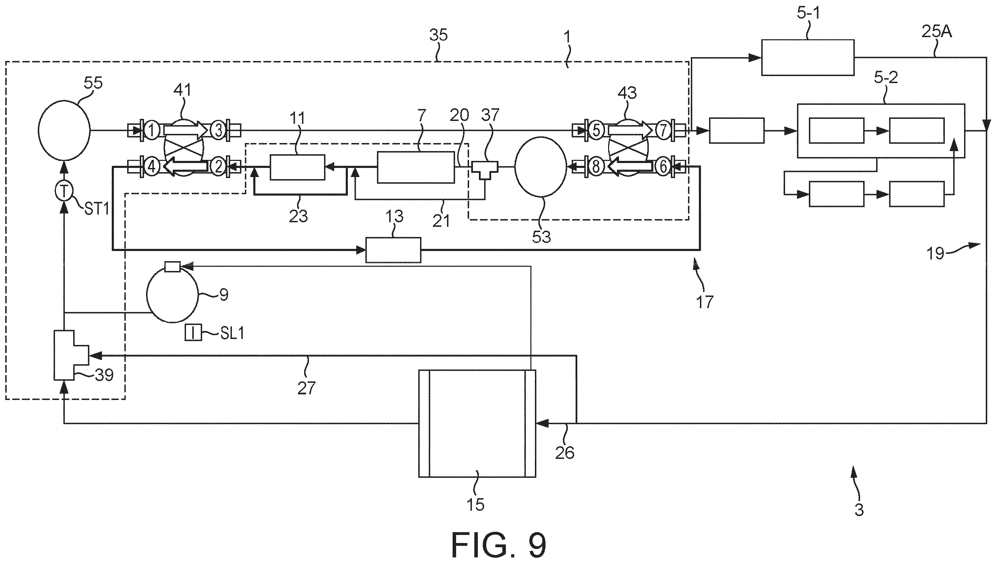

The operation of the control valve apparatus 1 in first, second and third operating modes of the crossflow valves 41, 43 is illustrated in Figures 9, 10 and 11.

The control valve apparatus 1 is shown in the first operating mode in Figure 9. The second valve control unit 33 is configured such that the first crossflow valve body 119 is in the first operating mode (shown in Figure 6A). The first crossflow port 95A and the third crossflow port 95C of the first crossflow valve 41 are in fluid communication with each other; and the second crossflow port 95B and the fourth crossflow port 95D of the first crossflow valve 41 are in fluid communication with each other. The second crossflow valve body 119 is in the first operating mode (shown in Figure 7A). The first crossflow port 115A and the third crossflow port 115C of the second crossflow valve 43 are in fluid communication with each other; and the second crossflow port 115B and the fourth crossflow port 115D of the second crossflow valve 43 are in fluid communication with each other. The first heat exchanger 13 may be selectively activated (i.e., switched ON) or de-activated (i.e., switched OFF) in dependence on the operating conditions. The first valve control unit 31 is configured selectively to provide the following operating conditions:
M1-A: Warm-up mode (Climate support in a first temperature range, for example -40°C to -10°C)
   - Coolant heater 11 is ON feeding heat to the first heat exchanger 13;
   - The first heat exchanger 13 is ON (for example to dissipate heat into the vehicle cabin);
   - Bypass control valve 37 is configured to bypass the battery unit 7.
M1-A2: Battery Warm-up mode (Warm-up in a second temperature range, for example -10°C to +5°C):
   - Coolant heater 11 is ON (to supply heated coolant to the battery unit 7);
   - The first heat exchanger 13 is OFF;
   - Bypass control valve 37 is configured to supply coolant to the battery unit 7.
M1-B: Regulation Mode:
   - Coolant heater 11 is OFF;
   - The first heat exchanger 13 is OFF;
   - Battery self-warming;
   - Bypass control valve 37 configured to supply coolant to the battery unit 7.
M1-C Maximum Cooling
   - Coolant heater 11 is OFF;
   - The first heat exchanger 13 is ON;
   - Bypass control valve 37 configured to supply coolant to the battery unit 7.

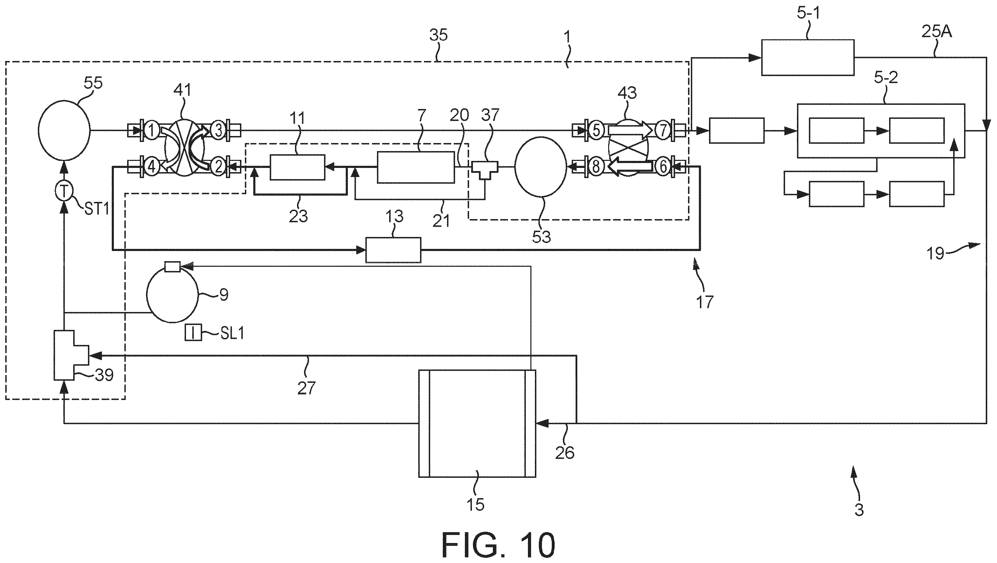

The control valve apparatus 1 is shown in the second operating mode in Figure 10. The second valve control unit 33 is configured such that the first crossflow valve body 119 is in the second operating mode (shown in Figure 6B). The first crossflow port 95A and the fourth crossflow port 95D of the first crossflow valve 41 are in fluid communication with each other; and the second crossflow port 95B and the third crossflow port 95C of the first crossflow valve 41 are in fluid communication with each other. The second crossflow valve body 119 is in the second operating mode (shown in Figure 7B). The first crossflow port 115A and the third crossflow port 115C of the second crossflow valve 43 are in fluid communication with each other; and the second crossflow port 115B and the fourth crossflow port 115D of the second crossflow valve 43 are in fluid communication with each other. The first heat exchanger 13 may be selectively activated (i.e., switched ON) or de-activated (i.e., switched OFF) in dependence on the operating conditions. The first valve control unit 31 is configured selectively to provide the following operating conditions:
M2-A: Electric drive unit (5-1, 5-2) battery unit 7 heat-share mode:
   - The front electric drive unit 5-1 and/or the rear electric drive units 5-2 dissipate heat;
   - The proportional control valve 39 is configured to bypass the second heat exchanger 15 (reduced or no ambient cooling);
   - The first heat exchanger 13 is OFF;
   - Coolant heater 11 is OFF;
   - Bypass control valve 37 configured to supply coolant to the battery unit 7;
   - Battery warming from waste heat from the front and rear electric drive units 5-1, 5-2.
M2-B: Battery unit 7 cooling mode:
   - The front electric drive unit 5-1 and/or the rear electric drive units 5-2 dissipate heat;
   - The proportional control valve 39 is configured to supply coolant to the second heat exchanger 15 (cooling to atmosphere);
   - The first heat exchanger 13 is OFF;
   - Coolant heater 11 is OFF;
   - Bypass control valve 37 configured to supply coolant to the battery unit 7;
   - Battery cooled by coolant supplied from the second heat exchanger 15.
M2-C: Heat pump recovery
   - The front electric drive unit 5-1 and/or the rear electric drive units 5-2 dissipate heat;
   - The proportional control valve 39 is configured to bypass the second heat exchanger 15 (reduced or no ambient cooling);
   - The first heat exchanger 13 is ON - (heat dissipated to cabin)
   - Coolant heater 11 is OFF;
   - Bypass control valve 37 configured to supply coolant from the first heat exchanger 13 (battery cooled by coolant supplied from first heat exchanger 13); or bypass control valve 37 configured to bypass the battery unit 7 (if battery cooling not required).

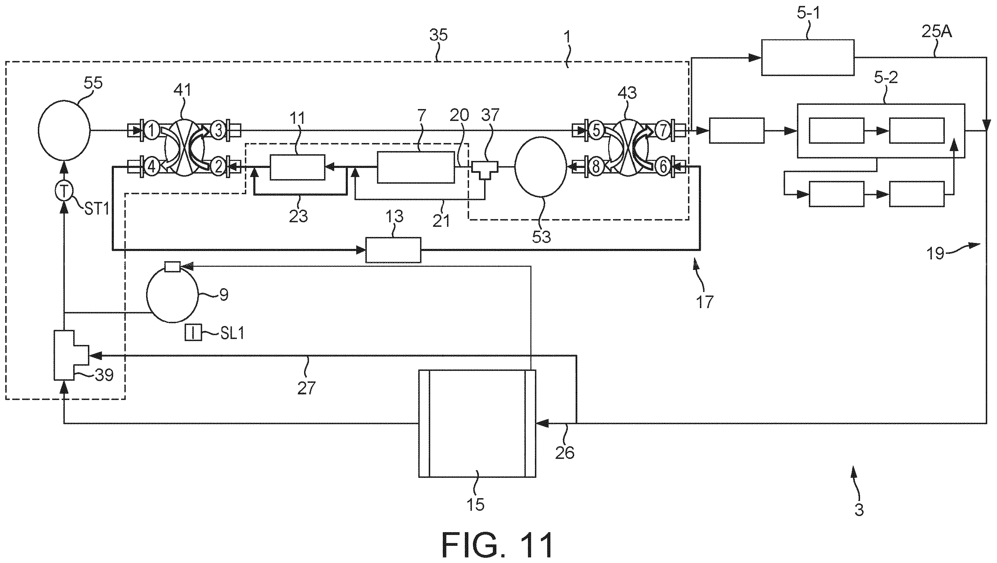

The control valve apparatus 1 is shown in the third operating mode in Figure 11. The second valve control unit 33 is configured such that the first crossflow valve body 119 is in the third operating mode (shown in Figure 6C). The first crossflow port 95A and the fourth crossflow port 95D of the first crossflow valve 41 are in fluid communication with each other; and the second crossflow port 95B and the third crossflow port 95C of the first crossflow valve 41 are in fluid communication with each other. The second crossflow valve body 119 is in the third operating mode (shown in Figure 7C). The first crossflow port 115A and the fourth crossflow port 115D of the second crossflow valve 43 are in fluid communication with each other; and the second crossflow port 115B and the third crossflow port 115C of the second crossflow valve 43 are in fluid communication with each other. The first heat exchanger 13 may be selectively activated (i.e., switched ON) or de-activated (i.e., switched OFF) in dependence on the operating conditions. The first valve control unit 31 is configured selectively to provide the following operating conditions:
M3-A: Heat pump electric drive unit heat-recovery mode:
   - The proportional control valve 39 is configured to bypass the second heat exchanger 15 (reduced or no ambient cooling);
   - The first heat exchanger 13 is ON (heat dissipated to cabin);
   - Bypass control valve 37 configured to supply coolant to the battery unit 7;
   - Coolant heater 11 is ON (active battery heating).
M3-B: Cabin priority heat pump electric drive unit heat-recovery mode:
   - The proportional control valve 39 is configured to bypass the second heat exchanger 15 (reduced or no ambient cooling);
   - The first heat exchanger 13 is ON (heat dissipated to cabin);
   - Bypass control valve 37 configured to supply coolant to the battery unit 7;
   - Coolant heater 11 is OFF (maintain battery temperature).

It will be appreciated that various changes and modifications can be made to the present invention without departing from the scope of the present invention as defined in the appended claims.

## Claims

1. A control valve apparatus (1) for controlling the circulation of a coolant in an electric vehicle thermal management system; the control valve apparatus comprising:
a bypass control valve (37) configured to control the flow of the coolant through a battery supply conduit (20) and a battery bypass conduit (21);
a proportional control valve (39) configured to control the proportion of the coolant that flows through a heat exchanger supply conduit and a heat exchanger bypass conduit (27); **characterized in that** the control valve apparatus comprises
an actuator (49) configured to actuate the bypass control valve (37) and the proportional control valve (39).

2. A control valve apparatus (1) as claimed in claim 1, wherein the bypass control valve (37) comprises a valve operable to open and close the battery bypass conduit (21).

3. A control valve apparatus (1) as claimed in claim 1 or claim 2, wherein the bypass control valve (37) comprises a first rotary drive member (61) rotatable to open and close the bypass control valve (37).

4. A control valve apparatus (1) as claimed in any one of claims 1, 2 or 3, wherein the proportional control valve (39) comprises a second rotary valve member (69) rotatable to provide proportional control of flow of the coolant through the heat exchanger bypass conduit (27).

5. A control valve apparatus (1) as claimed in claim 4, wherein the first and second rotary valve members (61, 69) are rotatable about a rotational axis; the first and second rotary valve members being offset from each other along the rotational axis.

6. A control valve apparatus (1) as claimed in any one of the preceding claims, wherein the actuator (49) comprises a rotary actuator, the operating state of the bypass and proportional control valves (37, 39) being dependent on an angular position of the actuator (49).

7. A control valve apparatus (1) as claimed in claim 6, wherein the bypass control valve (37) is configured to close the battery bypass conduit (21) when the actuator (49) is in a first angular range; and the bypass control valve (37) is configured to open the battery bypass conduit (21) when the actuator (49) is in a second angular range.

8. A control valve apparatus (1) as claimed in claim 7, wherein the rotation of the actuator (49) in a first direction in the first angular range progressively increases the proportion of the coolant passing through the heat exchanger bypass conduit (27).

9. A control valve apparatus (1) as claimed in claim 8, wherein the rotation of the actuator (49) in the first direction in the second angular range progressively decreases the proportion of the coolant passing through the heat exchanger bypass conduit (27).

10. A control valve apparatus as claimed in any one of the preceding claims comprising at least one crossflow valve (41, 43) configured selectively to control the connection between a first coolant circulation loop (17) and a second coolant circulation loop (19).

11. A control valve apparatus as claimed in claim 10, wherein the at least one crossflow valve (41, 43) is configured selectively to connect the first and second coolant circulation loops (17, 19) in series.

12. A thermal management system for an electric vehicle (V) comprising a control valve apparatus (1) according to any one of the preceding claims.

13. An electric vehicle (V) comprising a control valve apparatus according to any one of claims 1 to 12.

14. An electric vehicle (V) as claimed in claim 13 comprising at least one electric drive unit (5-1, 5-2), a traction battery (7) and a thermal management system, the thermal management system being configured to manage thermal properties of the at least one electric drive unit (5-1, 5-2) and/or the traction battery (7); the control valve apparatus (1) being configured to control the circulation of a coolant in the thermal management system.

## Patentansprüche

1. Steuerventileinrichtung (1) zum Steuern der Zirkulation eines Kühlmittels in einem Thermomanagementsystem eines Elektrofahrzeugs;
die Steuerventileinrichtung umfassend:
ein Bypass-Steuerventil (37), das konfiguriert ist, um den Durchfluss des Kühlmittels durch eine Batterieversorgungsleitung (20) und eine Batterie-Bypass-Leitung (21) zu steuern;
ein Proportionalsteuerventil (39), das konfiguriert ist, um den Anteil des Kühlmittels zu steuern, das durch eine Wärmetauscherversorgungsleitung und eine Wärmetauscher-Bypass-Leitung (27) fließt; **dadurch gekennzeichnet, dass** die Steuerventileinrichtung umfasst
einen Aktuator (49), der konfiguriert ist, um das Bypass-Steuerventil (37) und das Proportionalsteuerventil (39) zu betätigen.

2. Steuerventileinrichtung (1) nach Anspruch 1, wobei das Bypass-Steuerventil (37) ein Ventil umfasst, das betreibbar ist, um die Batterie-Bypass-Leitung (21) zu öffnen und zu schließen.

3. Steuerventileinrichtung (1) nach Anspruch 1 oder Anspruch 2, wobei das Bypass-Steuerventil (37) ein erstes Drehantriebselement (61) umfasst, das drehbar ist, um das Bypass-Steuerventil (37) zu öffnen und zu schließen.

4. Steuerventileinrichtung (1) nach einem der Ansprüche 1, 2 oder 3, wobei das Proportionalsteuerventil (39) ein zweites Drehventilelement (69) umfasst, das drehbar ist, um eine Proportionalsteuerung des Durchflusses des Kühlmittels durch die Wärmetauscher-Bypass-Leitung (27) bereitzustellen.

5. Steuerventileinrichtung (1) nach Anspruch 4, wobei das erste und das zweite Drehventilelement (61, 69) um eine Rotationsachse drehbar sind; wobei das erste und das zweite Drehventilelement entlang der Rotationsachse zueinander versetzt sind.

6. Steuerventileinrichtung (1) nach einem der vorstehenden Ansprüche, wobei der Aktuator (49) einen Drehaktuator umfasst, wobei der Betriebszustand der Bypass- und Proportionalsteuerventile (37, 39) von einer Winkelstellung des Aktuators (49) abhängig ist.

7. Steuerventileinrichtung (1) nach Anspruch 6, wobei das Bypass-Steuerventil (37) konfiguriert ist, um die Batterie-Bypass-Leitung (21) zu schließen, wenn sich der Aktuator (49) in einem ersten Winkelbereich befindet; und das Bypass-Steuerventil (37) konfiguriert ist, um die Batterie-Bypass-Leitung (21) zu öffnen, wenn sich der Aktuator (49) in einem zweiten Winkelbereich befindet.

8. Steuerventileinrichtung (1) nach Anspruch 7, wobei die Drehung des Aktuators (49) in einer ersten Richtung in dem ersten Winkelbereich progressiv den Anteil des Kühlmittels erhöht, das durch die Wärmetauscher-Bypass-Leitung (27) fließt.

9. Steuerventileinrichtung (1) nach Anspruch 8, wobei die Drehung des Aktuators (49) in der ersten Richtung in dem zweiten Winkelbereich progressiv den Anteil des Kühlmittels senkt, das durch die Wärmetauscher-Bypass-Leitung (27) fließt.

10. Steuerventileinrichtung nach einem der vorstehenden Ansprüche, umfassend mindestens ein Querströmungsventil (41, 43), das konfiguriert ist, um selektiv die Verbindung zwischen einem ersten Kühlmittelkreislauf (17) und einem zweiten Kühlmittelkreislauf (19) zu steuern.

11. Steuerventileinrichtung nach Anspruch 10, wobei das mindestens eine Querströmungsventil (41, 43) konfiguriert ist, um den ersten und den zweiten Kühlmittelkreislauf (17, 19) selektiv in Reihe zu verbinden.

12. Thermomanagementsystem für ein Elektrofahrzeug (V), umfassend eine Steuerventileinrichtung (1) nach einem der vorstehenden Ansprüche.

13. Elektrofahrzeug (V), umfassend eine Steuerventileinrichtung nach einem der Ansprüche 1 bis 12.

14. Elektrofahrzeug (V) nach Anspruch 13, umfassend mindestens eine elektrische Antriebseinheit (5-1, 5-2), eine Traktionsbatterie (7) und ein Thermomanagementsystem, wobei das Thermomanagementsystem konfiguriert ist, um thermische Eigenschaften der mindestens einen elektrischen Antriebseinheit (5-1, 5-2) und/oder der Traktionsbatterie (7) zu verwalten; wobei die Steuerventileinrichtung (1) konfiguriert ist, um die Zirkulation eines Kühlmittels in dem Thermomanagementsystem zu steuern.

## Revendications

1. Appareil de soupape de commande (1) permettant de commander la circulation d'un liquide de refroidissement dans un système de gestion thermique de véhicule électrique ;
l'appareil de soupape de commande comprenant :
une soupape de commande de dérivation (37) conçue pour réguler l'écoulement du liquide de refroidissement à travers un conduit d'alimentation de batterie (20) et un conduit de dérivation de batterie (21) ;
une vanne de commande proportionnelle (39) conçue pour réguler la proportion du liquide de refroidissement qui s'écoule à travers un conduit d'alimentation d'échangeur de chaleur et un conduit de dérivation d'échangeur de chaleur (27) ; **caractérisé en ce que** l'appareil de soupape de commande comprend
un actionneur (49) conçu pour actionner la vanne de commande de dérivation (37) et la vanne de commande proportionnelle (39).

2. Appareil de soupape de commande (1) selon la revendication 1, dans lequel la soupape de commande de dérivation (37) comprend une soupape capable d'ouvrir et de fermer le conduit de dérivation de batterie (21).

3. Appareil de soupape de commande (1) selon la revendication 1 ou la revendication 2, dans lequel la soupape de commande de dérivation (37) comprend un premier élément d'entraînement rotatif (61) pouvant être mis en rotation pour ouvrir et fermer la soupape de commande de dérivation (37).

4. Appareil de soupape de commande (1) selon l'une quelconque des revendications 1, 2 ou 3, dans lequel la soupape de commande proportionnelle (39) comprend un second élément de soupape rotatif (69) pouvant être mis en rotation pour fournir une commande proportionnelle de l'écoulement du réfrigérant à travers le conduit de dérivation de l'échangeur de chaleur (27).

5. Appareil de soupape de commande (1) selon la revendication 4, dans lequel les premier et second éléments de soupape rotative (61, 69) peuvent être mis en rotation autour d'un axe de rotation ; les premier et second éléments de soupape rotatifs étant décalés l'un de l'autre le long de l'axe de rotation.

6. Appareil de soupape de commande (1) selon l'une quelconque des revendications précédentes, dans lequel l'actionneur (49) comprend un actionneur rotatif, l'état de fonctionnement des soupapes de commande de dérivation et proportionnelles (37, 39) dépendant d'une position angulaire de l'actionneur (49).

7. Appareil de soupape de commande (1) selon la revendication 6, dans lequel la soupape de commande de dérivation (37) est conçue pour fermer le conduit de dérivation de batterie (21) lorsque l'actionneur (49) est dans une première plage angulaire ; et la soupape de commande de dérivation (37) est conçue pour ouvrir le conduit de dérivation de la batterie (21) lorsque l'actionneur (49) se trouve dans une seconde plage angulaire.

8. Appareil de soupape de commande (1) selon la revendication 7, dans lequel la rotation de l'actionneur (49) dans une première direction dans la première plage angulaire augmente progressivement la proportion du réfrigérant passant à travers le conduit de dérivation de l'échangeur de chaleur (27).

9. Appareil de soupape de commande (1) selon la revendication 8, dans lequel la rotation de l'actionneur (49) dans la première direction dans la seconde plage angulaire diminue progressivement la proportion du liquide de refroidissement passant à travers le conduit de dérivation de l'échangeur de chaleur (27).

10. Appareil de soupape de commande selon l'une quelconque des revendications précédentes, comprenant au moins une soupape d'écoulement transversal (41, 43) conçue sélectivement pour commander le raccordement entre une première boucle de circulation de liquide de refroidissement (17) et une seconde boucle de circulation de liquide de refroidissement (19).

11. Appareil de soupape de commande selon la revendication 10, dans lequel l'au moins une soupape d'écoulement transversal (41, 43) est conçue sélectivement pour raccorder les première et seconde boucles de circulation de liquide de refroidissement (17, 19) en série.

12. Système de gestion thermique destiné à un véhicule électrique (V) comprenant un appareil de soupape de commande (1) selon l'une quelconque des revendications précédentes.

13. Véhicule électrique (V) comprenant un appareil de soupape de commande selon l'une quelconque des revendications 1 à 12.

14. Véhicule électrique (V) selon la revendication 13, comprenant au moins une unité d'entraînement électrique (5-1, 5-2), une batterie de traction (7) et un système de gestion thermique, le système de gestion thermique étant configuré pour gérer des propriétés thermiques de l'au moins une unité d'entraînement électrique (5-1, 5-2) et/ou la batterie de traction (7) ; l'appareil de soupape de commande (1) étant configuré pour commander la circulation d'un liquide de refroidissement dans le système de gestion thermique.
